# EUROPEAN PATENT SPECIFICATION

(11) **EP 4 600 063 B1**
(45) Date of publication and mention of the grant of the patent: **25.11.2026**
(21) Application number: 23886038.1
(22) Date of filing: 27.09.2023
(51) Int. Cl.: B60K 6/38, B60K 6/40

(54) **HYBRID DRIVING MODULE**
HYBRIDANTRIEBSMODUL
MODULE D'ENTRAÎNEMENT HYBRIDE

(30) Priority: 02.11.2022 KR 20220144681
(43) Date of publication of application: 13.08.2025
(73) Proprietor: Valeo Kapec Co., Ltd., Daegu 42709 (KR)
(72) Inventor: KIM, Jung-Woo, Daegu 42709 (KR); JO, A-Ron, Daegu 42709 (KR); PARK, Jin-Su, Daegu 42709 (KR)
(74) Representative: Isarpatent
(86) International application number: PCT/KR2023/015039
(87) International publication number: WO 2024/096341

(56) References cited:
- EP-A1- 4 606 612
- CN-A- 114 423 964
- JP-A- 2021 188 732
- KR-A- 20110 046 149
- KR-A- 20130 034 425
- KR-A- 20220 162 652
- US-A1- 2020 247 229
- US-A1- 2020 247 229
- US-A1- 2021 131 541
- US-B2- 11 303 192

## Description

### [Technical Field]

This application claims priority to and the benefit of Korean Patent Application No. 10-2022-0144681 filed in the Korean Intellectual Property Office on November 2, 2022.

The present invention relates to a hybrid driving module, and more particularly, to a hybrid driving module in which a pendulum is installed between a rotor hub and an output hub to improve output quality.

### [Background Art]

A driving module used for a hybrid vehicle has a structure configured to transmit a force of a motor and a force of an engine to a transmission. A hybrid driving module includes a driving shaft configured to receive a force from an engine, a motor, an engine clutch configured to connect the driving shaft and the motor, an output hub configured to receive a force from the motor and/or the engine and transmit the force to the transmission, and a power transmission part configured to connect the motor and the output hub. The power transmission part may be structured to directly connect the motor and the output hub or structured to include a torque converter and a lock-up clutch.

Patent Document 1 discloses a hybrid driving module in which a pendulum is installed between the output hub and a rotor hub on which a rotor of the motor is installed. The pendulum flattens fluctuation present in a rotational force transmitted to the output hub from the engine and/or the motor, thereby providing an output with high quality to the transmission.

The pendulum disclosed in Patent Document 1 is installed in the hybrid driving module while having a structure suspended from a rotor hub side. However, when the pendulum is suspended from the rotor hub side, it is difficult to flatten the fluctuation of the rotational force occurring during a process in which the rotational force of the rotor hub is transmitted to the output hub through the torque converter or transmitted to the output hub through the lock-up clutch. That is, in order to improve the quality of the rotational force to be transmitted to the transmission, the pendulum may be suspended from the output hub rather than the rotor hub side.

Patent Document 1 also discloses a structure in which the pendulum is suspended from the output hub side. The pendulum is not connected directly to the output hub, but is fixed to an inner carrier of the lock-up clutch and suspended from the output hub side by means of the inner carrier. However, the above-mentioned structure accumulates manufacturing errors or assembling tolerances because the inner carrier is interposed. Therefore, there is a high likelihood of eccentricity occurring in the alignment of a rotation center of the pendulum with a center of the output hub. The eccentricity hinders the improvement of the quality of the rotational force of the output hub.

Further, a process of suspending the pendulum of Patent Document 1 from the rotor hub side or the output hub side needs to be separately performed, which increases the number of processes and makes the process cumbersome.

There is Patent Document US 11,047,461 B2 as a document of a related art. CN 114 423 964 A discloses a torque-transmitting device for a hybrid powertrain comprising an electric motor, a torque converter and a torsional vibration damper. US 11,303,192 B2 discloses a torque-converter clutch assembly including a clutch-flow deflector plate configured to direct cooling fluid to the clutch assembly.

### [Disclosure]

### [Technical Problem]

The present invention has been made in an effort to solve the above-mentioned problem, and an object of the present invention is to provide a hybrid driving module capable of improving output quality by increasing a degree of axial center alignment between an output hub and a pendulum installed at an output hub side.

Another object of the present invention is to provide a hybrid driving module in which a pendulum may be installed without a separate process, which does not increase the number of processes.

In addition, it can be easily understood that the objects and advantages of the present invention may be realized by means defined in the claims and a combination thereof.

### [Technical Solution]

The present invention relates to a hybrid driving module including:
a rotor hub; an output hub connected to a transmission, configured to be rotatable relative to the rotor hub, disposed rearward of the rotor hub, and disposed coaxially with the rotor hub; a torus disposed between the rotor hub and the output hub and configured to transmit a rotational force of the rotor hub to the output hub; a lock-up clutch disposed between the rotor hub and the output hub and configured to restrict or allow rotations of the rotor hub and the output hub; and a pendulum assembly connected to the output hub.

The hybrid driving module further includes:
a driving shaft coupled to an engine, configured to be rotatable relative to the rotor hub, disposed forward of the rotor hub, and disposed coaxially with the rotor hub; and an engine clutch disposed between the driving shaft and the rotor hub and configured to restrict or allow rotations of the driving shaft and the rotor hub.

In order to achieve the above-mentioned object, in the hybrid driving module of the present invention, a center alignment surface is provided on an outer periphery of the output hub.

The torus has a first centripetal extension portion centered while facing and adjoining the center alignment surface in a radial direction. Therefore, the center of the torus may be aligned with the output hub.

The torus may be a torque converter including an impeller provided on a rear cover connected to the rotor hub, a turbine facing the impeller in the axial direction, and a reactor disposed between the impeller and the turbine.

The first centripetal extension portion may be provided on a turbine plate having the turbine.

The lock-up clutch has a second centripetal extension portion centered while facing and adjoining the center alignment surface in the radial direction. Therefore, the center of the lock-up clutch may be aligned with the output hub.

The lock-up clutch may have a structure in which lock-up friction plates restricted in rotation by the rotor hub and lock-up friction plates restricted in rotation by the lock-up clutch plate are alternately disposed in the axial direction.

The second centripetal extension portion may be provided on the lock-up clutch plate.

The pendulum assembly has a third centripetal extension portion centered while facing and adjoining the center alignment surface in the radial direction. Therefore, the center of the pendulum assembly is aligned with the output hub.

Therefore, all the turbine plate, the lock-up clutch plate, and the pendulum assembly, which rotate integrally with the output hub, may be accurately centered with respect to the output hub without the accumulation of tolerances.

The center alignment surface may have a predetermined outer diameter in the axial direction. Therefore, the surface processing of the center alignment surface for aligning the centers of the turbine plate, the lock-up clutch plate, and the pendulum assembly may be performed all at once.

An inner diameter of an inner peripheral surface of the third centripetal extension portion adjoining the center alignment surface may correspond to an inner diameter of an inner peripheral surface of the first centripetal extension portion adjoining the center alignment surface.

The inner diameter of the inner peripheral surface of the third centripetal extension portion adjoining the center alignment surface may correspond to an inner diameter of an inner peripheral surface of the second centripetal extension portion adjoining the center alignment surface.

An inner diameter of an inner peripheral surface of the first centripetal extension portion adjoining the center alignment surface, an inner diameter of an inner peripheral surface of the second centripetal extension portion adjoining the center alignment surface, and an inner diameter of an inner peripheral surface of the third centripetal extension portion adjoining the center alignment surface may correspond to one another.

The output hub may have a centrifugal extension portion extending in a centrifugal direction from the center alignment surface.

Any one selected from the centrifugal extension portion, the first centripetal extension portion, the second centripetal extension portion, and the third centripetal extension portion may be restricted while adjoining at least another of the centrifugal extension portion, the first centripetal extension portion, the second centripetal extension portion, and the third centripetal extension portion in the axial direction.

The centrifugal extension portion, the first centripetal extension portion, the second centripetal extension portion, and the third centripetal extension portion may be stacked in the axial direction in any order.

The centrifugal extension portion may be disposed forward or rearward of the first centripetal extension portion, the second centripetal extension portion, and the third centripetal extension portion. Therefore, the center alignment surface may be processed at once.

In an embodiment of the hybrid driving module described above, the output hub further has a centrifugal extension portion extending in the centrifugal direction.

The torus may have a first centripetal extension portion facing the centrifugal extension portion in an axial direction.

The lock-up clutch may have a second centripetal extension portion facing the centrifugal extension portion in the axial direction.

The pendulum assembly may have a third centripetal extension portion facing the centrifugal extension portion in the axial direction.

The third centripetal extension portion may be fastened to the centrifugal extension portion by a plurality of fastening members disposed to be spaced apart from one another in the circumferential direction, such that the center of the pendulum assembly is aligned with the center of the output hub.

Any one selected from the centrifugal extension portion, the first centripetal extension portion, the second centripetal extension portion, and the third centripetal extension portion may be restricted while adjoining at least another of the centrifugal extension portion, the first centripetal extension portion, the second centripetal extension portion, and the third centripetal extension portion in the axial direction.

The centrifugal extension portion, the first centripetal extension portion, the second centripetal extension portion, and the third centripetal extension portion may be fastened by a plurality of common fastening members disposed to be spaced apart from one another in a circumferential direction, such that a center of the output hub and centers of the torus, the lock-up clutch, and the pendulum assembly may be aligned.

An outer diameter of the centrifugal extension portion may be larger than an inner diameter of the first centripetal extension portion, an inner diameter of the second centripetal extension portion, and an inner diameter of the third centripetal extension portion.

The centrifugal extension portion may have a plurality of first holes disposed to be spaced apart from one another in a circumferential direction.

The first centripetal extension portion may have a plurality of second holes disposed to be spaced apart from one another in the circumferential direction.

The second centripetal extension portion may have a plurality of third holes disposed to be spaced apart from one another in the circumferential direction.

The third centripetal extension portion may have a plurality of fourth holes disposed to be spaced apart from one another in the circumferential direction.

The first holes, the second holes, the third holes, and the fourth holes, which are aligned in the axial direction, may be fastened by the common fastening members.

The common fastening member may include a first rivet.

The centrifugal extension portion may be disposed forward or rearward of the first centripetal extension portion, the second centripetal extension portion, and the third centripetal extension portion. Therefore, the machining processing for forming the centrifugal extension portion may be performed at once.

The centrifugal extension portion may extend radially outward from an outer peripheral surface of the output hub.

The outer peripheral surface of the output hub may include a center alignment surface.

The structure for aligning the centers by means of the fastening members may be applied in addition to the centering provided by the center alignment surface.

The third centripetal extension portion may be disposed between the first centripetal extension portion and the second centripetal extension portion in the axial direction. Therefore, it is possible to ensure the space in which the pendulum assembly may be installed.

The first centripetal extension portion may be disposed rearward of the second centripetal extension portion and the third centripetal extension portion.

An inclined surface portion extending rearward radially outward may be connected to a centrifugal side of the third centripetal extension portion.

A front cover connected to the rotor hub may have a radially enlarged portion having a larger radius than the rotor hub.

The pendulum assembly may be disposed between the radially enlarged portion and the torus.

### [Advantageous Effects]

According to the hybrid driving module of the present invention, the output hub and the pendulum assembly are directly centered, such that the degree of axial center alignment between the output hub and the pendulum installed at the output hub side is increased, and the output quality is high.

According to the hybrid driving module of the present invention, not only the center of the pendulum assembly is aligned with the center of the output hub, but also the center of the turbine plate is directly aligned with the lock-up clutch plate, such that the output quality may be further improved.

According to the hybrid driving module of the present invention, the pendulum assembly, the lock-up clutch plate, and the turbine plate, which rotate together with the output hub, are fastened altogether, such that a separate process of suspending the pendulum assembly is not required.

The specific effects of the present invention, together with the above-mentioned effects, will be described along with the description of specific items for carrying out the present invention.

### [Description of Drawings]

FIG. 1 is a cross-sectional side view of a hybrid driving module according to an exemplary embodiment of the present invention.
FIG. 2 is an enlarged view illustrating a portion where an output hub, a lock-up clutch plate, a pendulum assembly, and a turbine plate of the hybrid driving module in FIG. 1 are coupled.

### <Explanation of Reference Numerals and Symbols>

10: Rotor hub, 11: Hub shaft, 12: Shaft, 13: First radial extension portion, 13, 23, or 33: Radial extension portion, 35: Axial extension portion, 15: Rotor, 20: Front cover, 23: Second radial extension portion, 25: Rearward extension portion, 27: Radially enlarged portion, 29: Lock-up clutch carrier, 291: Inward concave-convex portion, 30: Connector, 33: Third radial extension portion, 35: Axial extension portion, 37: Inward teeth, 41: Piston plate, 42: Elastic body, 43: Chamber plate, 45: First bearing, 44: Driving shaft, 47: Inner carrier, 471: Outward teeth, 48: Friction plate, 47, 48, or 30: Engine clutch, 51, 60, or 65: Torus, torque converter, 50: Rear cover, 51: Impeller, 52: Second bearing, 60: Reactor, 61: One-way clutch, 62: Third bearing, 64: Fixed end, 65: Turbine, 66: Turbine plate, 661: First centripetal extension portion, 663: Second hole, 70: Output hub, 71: Hub body, 72: Spline portion, 73: Center alignment surface, 74: Centrifugal extension portion, 741: First hole, 75: Spacer, 29, 82, or 83: Lock-up clutch, 81: Lock-up piston, 82: Lock-up friction plate, 83: Lock-up clutch plate, 831: Outward concave-convex portion, 832: Second centripetal extension portion, 834: Third hole, 90: Pendulum assembly, 91: Center plate, 92: Roller pin, 93: Front weight, 94: Rear weight, 95: Connection plate, 951: Outer radial extension portion, 952: Inclined surface portion, 953: Third centripetal extension portion, 954: Fourth hole, 955: Coupling member (second rivet), R: Fastening member (first rivet)

### [Mode for Invention]

Hereinafter, exemplary embodiments of the present invention will be described in detail with reference to the accompanying drawings.

The present invention is not limited to the embodiments disclosed herein, but will be variously changed and implemented in various different forms. The embodiments are provided so that the present invention will be thorough and complete, and also to provide a more complete understanding of the scope of the present invention to those of ordinary skill in the art.

It should be interpreted that the accompanying drawings are provided only to allow those skilled in the art to easily understand the exemplary embodiments disclosed in the present specification, and the technical spirit disclosed in the present specification is not limited by the accompanying drawings, and includes all alterations, equivalents, and alternatives that are included in the spirit and the technical scope of the present invention. In the drawings, sizes or thicknesses of constituent elements may be exaggerated, increased, or decreased for convenience of understanding, but the protection scope of the present invention should not be restrictively construed.

The terms used in the present specification are used only for the purpose of describing particular examples or embodiments and are not intended to limit the present invention. Further, singular expressions include plural expressions unless clearly described as different meanings in the context. In the present application, the terms "comprises," "comprising," "includes," "including," "containing," "has," "having", and other variations thereof are intended to specify the presence of features, integers, steps, operations, elements, components, and/or combinations thereof disclosed in the specification. That is, in the present application, it should be understood that the terms "comprises," "comprising," "includes," "including," "containing," "has," "having", and other variations thereof do not preclude the presence or addition of one or more other features, integers, steps, operations, elements, components, and/or combinations thereof.

The terms including ordinal numbers such as "first," "second," and the like may be used to describe various constituent elements, but the constituent elements are not limited by the terms. These terms are used only to distinguish one constituent element from another constituent element.

When one constituent element is described as being "coupled" or "connected" to another constituent element, it should be understood that one constituent element can be coupled or connected directly to another constituent element, and an intervening constituent element can also be present between the constituent elements. When one constituent element is described as being "coupled directly to" or "connected directly to" another constituent element, it should be understood that no intervening constituent element is present between the constituent elements.

When one constituent element is described as being "disposed above" or "disposed below" another constituent element, it should be understood that one constituent element can be disposed directly on another constituent element, and an intervening constituent element can also be present between the constituent elements.

Unless otherwise defined, all terms used herein, including technical or scientific terms, have the same meaning as commonly understood by those skilled in the art to which the present invention pertains. The terms such as those defined in a commonly used dictionary should be interpreted as having meanings consistent with meanings in the context of related technologies and should not be interpreted as ideal or excessively formal meanings unless explicitly defined in the present application.

Because a hybrid driving module according to an embodiment is symmetrical with respect to an axis, only the half of the hybrid driving module based on the axis is illustrated for the convenience of illustration. In addition, for the convenience of description, a direction along a longitudinal direction of an axis defining a center of a rotation of the hybrid driving module is defined as an axial direction. That is, a forward/rearward direction or an axial direction is defined as a direction parallel to a rotation axis. A front (forward) means any one direction of a power source, e.g., a direction toward an engine. A rear (rearward) means the other direction, e.g., a direction toward a transmission. Therefore, a front surface means a surface facing forward, and a rear surface means a surface facing rearward.

A radial direction means a direction toward or away from a center of the rotation axis along a straight line passing through the center of the rotation axis on the plane perpendicular to the rotation axis. A direction radially away from the center is referred to as a centrifugal direction, and a direction toward the center is referred to as a centripetal direction.

A peripheral direction or a circumferential direction means a direction surrounding a periphery of the rotation axis. An outer periphery means an outer circumference, and an inner periphery means an inner circumference. Therefore, an outer peripheral surface is a surface facing away from the rotation axis, and an inner peripheral surface is a surface facing the rotation axis.

A circumferential surface means a surface, a normal line of which is directed in a circumferential direction.

### [Overall Structure of Hybrid Driving Module]

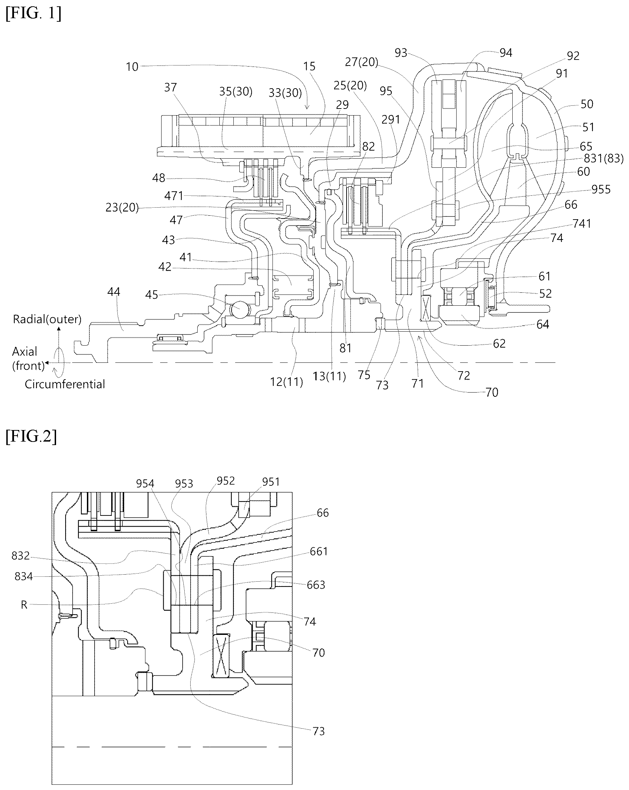

Hereinafter, an overall structure of an exemplary embodiment of a hybrid driving module according to the present invention will be described with reference to FIG. 1.

The hybrid driving module includes a driving shaft 44 configured to receive a force from an engine, a motor including a stator (not illustrated) and a rotor 15, a main housing (not illustrated) in which the stator is installed, a rotor hub 10 on which the rotor 15 is installed, the rotor hub 10 being configured to rotate together with the rotor 15, engine clutches 47, 48, and 30 disposed between the driving shaft 44 and the rotor hub 10 and configured to selectively connect the driving shaft 44 and the rotor hub 10 so that power of the driving shaft 44 is transmitted to the rotor hub 10, and a power transmission part disposed between the rotor hub 10 and an output hub 70 and configured to transmit a rotational force of the rotor hub 10 to the output hub 70.

The rotor hub 10 includes a hollow hub shaft 11 disposed at a centripetal side and extending in an axial direction, radial extension portions 13, 23, and 33 extending radially outward from the hub shaft 11, and an axial extension portion 35 disposed at a centrifugal side, connected to the radial extension portions 13, 23, and 33, and extending in a forward/rearward direction. The rotor 15 is installed on an outer periphery of the axial extension portion 35.

The rotor hub 10 may be manufactured by coupling a plurality of components. The components, which constitute the rotor hub 10, may include the hub shaft 11, a front cover 20, and a connector 30.

The hub shaft 11 includes a hollow shaft 12 extending in the forward/rearward direction, and a first radial extension portion 13 extending radially outward from an outer periphery of the shaft 12.

The front cover 20 includes a second radial extension portion 23 welded to a centrifugal side of the first radial extension portion 13 and extending radially outward, a rearward extension portion 25 extending rearward from a centrifugal side end of the second radial extension portion 23, and a radially enlarged portion 27 extending radially outward from a rear end of the rearward extension portion 25 and welded to a rear cover 50. A lock-up clutch carrier 29 may be welded to a rear surface of the second radial extension portion 23.

The connector 30 includes a third radial extension portion 33 welded to a centrifugal side of the second radial extension portion 23 and extending radially outward, and the axial extension portion 35 connected to a centrifugal side of the third radial extension portion 33 and extending in the axial direction. The axial extension portion 35 may be disposed radially outward of the rearward extension portion 25. Inward teeth 37 are provided forward of the third radial extension portion 33 and provided on an inner periphery of the axial extension portion 35, and the inward teeth 37 protrude in a centripetal direction. The rotor 15 is installed on the outer periphery of the axial extension portion 35.

The radial extension portions 13, 23, and 33 of the rotor hub 10 may include the first radial extension portion 13, the second radial extension portion 23, and the third radial extension portion 33. Further, the axial extension portion 35 of the rotor hub 10 may include the axial extension portion 35 of the connector 30.

When the rotor hub 10 is configured by coupling the plurality of components as described above, the most reasonable manufacturing method (e.g., die casting, sheet metal pressing, etc.) may be applied in accordance with shapes that the components need to have, such that costs required to manufacture the rotor hub 10 may be reduced.

The driving shaft 44 is provided forward of the hub shaft 11. The driving shaft 44 may be disposed coaxially with the hub shaft 11, configured to rotate relative to the hub shaft 11, and connected to the engine.

The driving shaft 44 may have a hollow portion, and the hollow portion may be opened rearward. The hub shaft 11 may enter the hollow portion of the driving shaft 44 from a rear side of the driving shaft 44 and be disposed in the hollow portion of the driving shaft 44.

In order to axially align the driving shaft 44 and the hub shaft 11 while allowing a relative rotation between the driving shaft 44 and the hub shaft 11, bearings may be installed between an outer periphery of the hub shaft 11 and an inner periphery of the driving shaft 44. The bearings may be installed at two positions spaced apart from each other in the axial direction. As illustrated, a needle bearing may be installed at a front side based on the axial direction, and a first bearing 45 may be installed at a rear side based on the axial direction.

The first bearing 45 restricts axial positions of the driving shaft 44 and the hub shaft 11. To this end, a front side of an outer race of the first bearing 45 interferes with a stepped projection provided on the inner periphery of the driving shaft 44, and a rear side of the outer race interferes with a snap ring installed on the inner periphery of the driving shaft 44. Further, a rear side of an inner race of the first bearing 45 interferes with a stepped projection provided on the outer periphery of the hub shaft 11, and a front side of the inner race interferes with a snap ring installed on the outer periphery of the hub shaft 11.

An inner carrier 47 is coupled to the rear side of the driving shaft 44. For example, the inner carrier 47 is welded to the driving shaft 44 and integrated with the driving shaft 44.

Outward teeth 471 are provided at a centrifugal side of the inner carrier 47 and extend in the axial direction. The outward teeth 471 face the inward teeth 37 and are disposed to be spaced apart radially inward from the inward teeth 37 of the rotor hub 10. Further, a plurality of friction plates 48, which are restricted in rotation relative to the inward teeth 37, and a plurality of friction plates 48, which are restricted in rotation related to the outward teeth 471, are alternately installed in the axial direction between the inward teeth 37 and the outward teeth 471 and constitute the engine clutches 47, 48, and 30.

A chamber plate 43 is provided rearward of the inner carrier 47. The chamber plate 43 is installed on the shaft 12. A centripetal side end of the chamber plate 43 is interposed between the rear surface of the inner race of the first bearing 45 and the front surface of the stepped projection of the hub shaft 11, such that the axial position of the chamber plate 43 with respect to the hub shaft 11 is restricted.

A piston plate 41 is provided between the chamber plate 43, the friction plates 48, and the radial extension portions 13, 23, and 33 of the rotor hub 10. A centripetal side end of the piston plate 41 is installed on the surface of the hub shaft 11 so as to be slidable in the axial direction in a sealed state. A radial central portion of the piston plate 41 is installed to be slidable in the axial direction in a state of being sealed from the chamber plate 43 and installed to be slidable in the axial direction in a state of being sealed from the rotor hub 10.

A space between the rear surface of the piston plate 41 and the front surface of the rotor hub 10 defines a piston chamber, and a space between the front surface of the piston plate 41 and a rear surface of the chamber plate 43 defines a compensation chamber.

The piston chamber and the compensation chamber are filled with oil. Therefore, dynamic pressure applied to the oil in the piston chamber and the compensation chamber is constant even though a rotational velocity of the rotor hub 10 varies.

When positive pressure in the piston chamber increases as hydraulic pressure is transmitted to the piston chamber through the hollow portion of the hub shaft 11, the piston plate 41 moves forward and presses the friction plate 48 forward, such that a rotation of the driving shaft 44 is restricted by the rotor hub 10.

An elastic body 42 is installed between the chamber plate 43 and the piston plate 41 and elastically presses the chamber plate 43 and the piston plate 41 away from each other. Therefore, when a force by which positive pressure of the oil applied to the piston chamber presses the piston plate 41 forward becomes lower than an elastic force of the elastic body 42, the piston plate 41 may move away from the friction plate 48 while being moved immediately rearward by the elastic body 42, such that the restriction of the rotation of the driving shaft 44 related to the rotor hub 10 may be released. This configuration ensures a response speed of the engagement and disengagement of the engine clutches 47, 48, and 30.

The power transmission part is disposed in an internal space defined by the front cover 20 provided on the rotor hub 10 and the rear cover 50 connected to the front cover 20. The internal space is disposed rearward of the rotor hub 10.

The power transmission part includes tori configured to transmit a rotational force, which is transmitted from the rotor hub 10 through the rear cover 50, to the output member, and lock-up clutches 29, 82, and 83 configured to transmit a rotational force, which is transmitted from the rotor hub 10, directly to the output member.

The tori may be torque converters 51, 60, and 65 including an impeller 51, a turbine 65, and a reactor 60. However, the present invention does not exclude a case in which the tori are fluid clutches including the impeller 51 and the turbine 65 without the reactor 60.

The torque converters 51, 60, and 65 include the impeller 51 installed on a front surface of the rear cover 50, the turbine 65 disposed forward of the impeller 51 and configured to face the impeller 51, and the reactor 60 disposed between the impeller 51 and the turbine 65.

An oil pump (not illustrated) may be connected to a centripetal side end of the rear cover 50 and produce pressure of the oil to be supplied to the hybrid driving module.

The turbine 65 is installed on a rear surface of a turbine plate 66. The turbine plate 66 extends in the centripetal direction from the turbine 65 and is connected to the output hub 70.

The reactor 60 is installed at a fixed end 64 by a one-way clutch 61 so as to be rotatable in one direction and restricted in rotation in the other direction. The fixed end 64 may be connected to the transmission and kept fixed.

The lock-up clutches 29, 82, and 83 include the lock-up clutch carrier 29 having an inward concave-convex portion 291 provided on the inner periphery thereof and extending in the axial direction, a lock-up clutch plate 83 connected to the output hub 70 and having an outward concave-convex portion 831 provided radially inside the inward concave-convex portion 291 and configured to face the inward concave-convex portion 291 in the radial direction, and a lock-up friction plate 82 disposed between the inward concave-convex portion 291 and the outward concave-convex portion 831.

The lock-up friction plate 82 may have a structure in which the lock-up friction plate 82, which is restricted in rotation by the inward concave-convex portion 291, and the lock-up friction plate 82, which is restricted in rotation by the outward concave-convex portion 831, are alternately disposed in the axial direction.

A lock-up piston 81 is installed between the lock-up friction plate 82, the lock-up clutch plate 83, and the radial extension portions 13, 23, and 33 of the rotor hub 10. A centrifugal end of the lock-up piston 81 is installed on an inner peripheral surface of the lock-up clutch carrier 29 and configured to be slidable in the axial direction in a sealed state, and a centripetal end of the lock-up piston 81 is installed on an outer peripheral surface of the shaft 12 and configured to be slidable in the axial direction in a sealed state.

A space between the radial extension portions 13, 23, and 33 and the lock-up piston 81 defines a lock-up chamber. When hydraulic pressure is transmitted to the lock-up chamber through the hollow portion of the hub shaft 11 and a force by which the hydraulic pressure in the lock-up chamber pushes the lock-up piston 81 rearward becomes higher than a force by which the hydraulic pressure at the rear side of the lock-up piston 81 pushes the lock-up piston 81 forward, the lock-up piston 81 moves rearward and presses the lock-up friction plate 82 rearward, and the rotor hub 10 is restricted in rotation by the output hub 70 by means of the lock-up clutch plate 83. That is, the rotor hub 10 and the output hub 70 are connected directly.

A second bearing 52 is installed between the rear cover 50 and the reactor 60 and supports a relative rotation between the rear cover 50 and the reactor 60. In addition, a third bearing 62 is installed between the reactor 60 and the output hub 70 and supports a relative rotation between the reactor 60 and the output hub 70. Further, a spacer 75 is interposed between the output hub 70 and the hub shaft 11 and supports a relative rotation between the output hub 70 and the hub shaft 11. The spacer 75 allows a flow of a fluid through the corresponding space while maintaining an interval between the output hub 70 and the hub shaft 11.

According to the present invention, a pendulum assembly 90 is installed on the output hub 70.

### [Pendulum Installation Structure of Hybrid Driving Module]

Hereinafter, a structure in which the pendulum assembly is installed on the hybrid driving module of the embodiment will be described with reference to FIGS. 1 and 2.

The pendulum assembly 90 includes a flat ring-shaped center plate 91, front and rear weights 93 and 94 provided at an outer peripheral side of the center plate 91 and respectively disposed forward and rearward of the center plate 91, a roller pin 92 configured to connect the front weight 93 and the rear weight 94, and a connection plate 95 connected to a centripetal side of the center plate 91 and extending radially inward from the center plate 91. However, the structure of the pendulum does not need to be necessarily limited thereto.

The outer peripheral side of the center plate 91 is at least disposed between the radially enlarged portion 27 of the front cover 20 and the tori 51, 60, and 65 in the axial direction, which may maximally ensure the moment of inertia of the pendulum.

The connection plate 95 includes an outer radial extension portion 951 configured to adjoin an axial surface of the center plate 91, an inclined surface portion 952 inclined forward radially inward from the outer radial extension portion 951, and a third centripetal extension portion 953 extending radially inward from the inclined surface portion 952.

The outer radial extension portion 951 and the center plate 91 may be coupled by a coupling member 955 fastened in the axial direction. The coupling member 955 may be a second rivet.

The output hub 70 includes a ring-shaped hub body 71, a spline portion 72 provided on a centripetal side inner peripheral surface of the hub body 71, a center alignment surface 73 provided on an outer peripheral surface of the hub body 71, and a centrifugal extension portion 74 extending radially outward from the hub body 71.

The spline portion 72 engages with an input shaft of the transmission and transmits an output from the hybrid driving module to the transmission.

The third centripetal extension portion 953 of the pendulum assembly 90 is centered while facing and adjoining the center alignment surface 73 in the radial direction. Therefore, the center of the pendulum assembly 90 is aligned with the output hub 70.

A plurality of first holes 741 are provided in the centrifugal extension portion 74 and disposed to be spaced apart from one another at predetermined intervals in the circumferential direction. A plurality of fourth holes 954 are formed even in the third centripetal extension portion 953 and disposed to be spaced apart from one another at predetermined intervals in the circumferential direction while corresponding to the plurality of first holes 741.

The centrifugal extension portion 74 and the third centripetal extension portion 953 are fastened to each other in the axial direction by fastening members R that penetrate the first holes 741 and the fourth holes 954. The fastening member R may be a first rivet. Therefore, the output hub 70 and the pendulum assembly 90 are restricted by each other in the axial direction and restricted by each other in the circumferential direction.

Further, the plurality of first rivets R are disposed at predetermined intervals in the circumferential direction and restrict the centrifugal extension portion 74 and the third centripetal extension portion 953, such that the pendulum assembly 90 and the output hub 70 may be centered by the first rivets R.

As described above, according to the present invention, the pendulum assembly 90 is fixed while being directly centered on the output hub 70, such that the pendulum assembly 90 may be precisely aligned axially, and the quality of the final output of the hybrid driving module may be directly improved.

Meanwhile, a first centripetal extension portion 661 may be provided at a centripetal side of the turbine plate 66 of the tori 51, 60, and 65 and centered while facing and adjoining the center alignment surface 73 in the radial direction. Therefore, the center of the turbine 65, which is a component at the output side of the tori 51, 60, and 65, may be precisely aligned with a center of the output hub 70.

A plurality of second holes 663 are provided in the first centripetal extension portion 661 and disposed at predetermined intervals in the circumferential direction. The plurality of second holes 663 are provided at positions corresponding to the first holes 741 of the centrifugal extension portion 74.

The centrifugal extension portion 74 and the first centripetal extension portion 661 are fastened to each other in the axial direction by the first rivets R that penetrate the first holes 741 and the second holes 663. Therefore, the output hub 70 and the turbine plate 66 are restricted by each other in the axial direction and restricted by each other in the circumferential direction.

Further, the plurality of first rivets R are disposed at predetermined intervals in the circumferential direction and restrict the centrifugal extension portion 74 and the first centripetal extension portion 661, such that the turbine plate 66 and the output hub 70 may be centered by the first rivets R.

As described above, according to the present invention, the turbine plate 66 of the torque converter is fixed while being directly centered on the output hub 70, such that the turbine plate 66 may be precisely aligned axially.

Meanwhile, a second centripetal extension portion 832 may be provided on the lock-up clutch plate 83 and centered while facing and adjoining the center alignment surface 73 in the radial direction. Therefore, the center of the lock-up clutch plate 83 may be aligned with the output hub 70.

A plurality of third holes 834 are provided in the second centripetal extension portion 832 and disposed at predetermined intervals in the circumferential direction. The plurality of third holes 834 are provided at positions corresponding to the first holes 741 of the centrifugal extension portion 74.

The centrifugal extension portion 74 and the second centripetal extension portion 832 are fastened to each other in the axial direction by the first rivets R that penetrate the first holes 741 and the third holes 834. Therefore, the output hub 70 and the lock-up clutch plate 83 are restricted by each other in the axial direction and restricted by each other in the circumferential direction.

Further, the plurality of first rivets R are disposed at predetermined intervals in the circumferential direction and restrict the centrifugal extension portion 74 and the second centripetal extension portion 832, such that the lock-up clutch plate 83 and the output hub 70 may be centered by the first rivets R.

As described above, according to the present invention, the lock-up clutch plate 83 of the torque converter is fixed while being directly centered on the output hub 70, such that the lock-up clutch plate 83 may be precisely aligned axially.

Therefore, all the turbine plate 66, the lock-up clutch plate 83, and the pendulum assembly 90, which rotate integrally with the output hub 70, may be accurately centered with respect to the output hub 70 without the accumulation of tolerances.

An outer diameter of the centrifugal extension portion 74 is larger than an inner diameter of the first centripetal extension portion 661, an inner diameter of the second centripetal extension portion 832, and an inner diameter of the third centripetal extension portion 953. Therefore, the centrifugal extension portion 74, the first centripetal extension portion 661, the second centripetal extension portion 832, and the third centripetal extension portion 953 may be stacked while adjoining one another in the axial direction.

In this case, the first holes 741, the second holes 663, the third holes 834, and the fourth holes 954 may be aligned together and fixed altogether by the first rivets R that are common fastening members. Therefore, it is possible to install the pendulum assembly 90 in the hybrid driving module without adding a separate process of fixing the pendulum assembly 90.

In addition, the centrifugal extension portion 74, the first centripetal extension portion 661, the second centripetal extension portion 832, and the third centripetal extension portion 953 are fastened by the common first rivets R disposed to be spaced apart from one another in the circumferential direction, such that the center of the output hub 70 and the centers of the tori 51, 60, and 65, the lock-up clutches 29, 82, and 83, and the pendulum assembly 90 do not need to be individually aligned but aligned altogether by only the process of fastening the output hub 70, the tori 51, 60, and 65, the lock-up clutches 29, 82, and 83, and the pendulum assembly 90 by using the first rivets R.

The center alignment surface 73 may have a predetermined outer diameter in the axial direction. Further, the centrifugal extension portion 74 may be disposed forward or rearward of the first centripetal extension portion 661, the second centripetal extension portion 832, and the third centripetal extension portion 953. The embodiment discloses a structure in which the centrifugal extension portion 74 is disposed at a rearmost side.

According to this structure, the surface processing of the center alignment surface 73 for aligning the centers of the turbine plate 66, the lock-up clutch plate 83, and the pendulum assembly 90 may be performed all at once.

In addition, machining processing for forming the centrifugal extension portion 74 and the center alignment surface 73 may be performed at once. For example, unless the centrifugal extension portion 74 is disposed at the foremost or rearmost side in the axial direction, the center alignment surfaces 73 need to be provided both forward and rearward of the centrifugal extension portion 74, and as a result, the machining process for forming the centrifugal extension portion 74 and the center alignment surface 73 needs to be divided into two processes.

An inner diameter of the inner peripheral surface of the third centripetal extension portion 953 adjoining the center alignment surface 73 may correspond to an inner diameter of the inner peripheral surface of the first centripetal extension portion 661 adjoining the center alignment surface 73, an inner diameter of the inner peripheral surface of the second centripetal extension portion 832 adjoining the center alignment surface 73.

Therefore, all the first centripetal extension portion 661, the second centripetal extension portion 832, and the third centripetal extension portion 953 may be processed to have the same inner diameter when the central portions of the first centripetal extension portion 661, the second centripetal extension portion 832, and the third centripetal extension portion 953 are processed, such that the first centripetal extension portion 661, the second centripetal extension portion 832, and the third centripetal extension portion 953 may be processed by common processing machines or processing tools so that the inner diameters of all the first centripetal extension portion 661, the second centripetal extension portion 832, and the third centripetal extension portion 953 precisely correspond to one another.

Any one selected from the centrifugal extension portion 74, the first centripetal extension portion 661, the second centripetal extension portion 832, and the third centripetal extension portion 953 may be restricted while adjoining at least another of the centrifugal extension portion 74, the first centripetal extension portion 661, the second centripetal extension portion 832, and the third centripetal extension portion 953 in the axial direction.

Particularly, the centrifugal extension portion 74, the first centripetal extension portion 661, the second centripetal extension portion 832, and the third centripetal extension portion 953 may be stacked in the axial direction in any order.

According to the embodiment, the centripetal extension portions may be disposed in the order of the second centripetal extension portion 832, the third centripetal extension portion 953, and the first centripetal extension portion 661 from the front side to the rear side.

Because the third centripetal extension portion 953 is disposed between the first centripetal extension portion 661 and the second centripetal extension portion 832, the space in which the pendulum assembly 90 may be installed may be ensured between the lock-up clutches 29, 82, and 83 and the tori 51, 60, and 65 in the axial direction.

In this case, because the inclined surface portion 952, which extends rearward radially outward, is connected to the centrifugal side of the third centripetal extension portion 953, the pendulum assembly 90 may be disposed between the radially enlarged portion 27 and the tori 51, 60, and 65.

While the present invention has been described above with reference to the accompanying drawings, the present invention is not limited to the drawings and the embodiments disclosed in the present specification.

Further, even though the operational effects of the configurations of the present invention have not been explicitly disclosed and described in the description of the embodiment of the present invention, the effects, which can be expected by the corresponding configurations, should, of course, be acceptable.

## Claims

1. A hybrid driving module comprising:
a rotor hub (10);
a driving shaft (44) coupled to an engine, configured to be rotatable relative to the rotor hub (10), disposed forward of the rotor hub (10) in an axial direction, and disposed coaxially with the rotor hub (10);
an engine clutch (30, 47, 48) disposed between the driving shaft (44) and the rotor hub (10) and configured to restrict or allow rotations of the driving shaft (44) and the rotor hub (10);
an output hub (70) connected to a transmission, configured to be rotatable relative to the rotor hub (10), disposed rearward of the rotor hub (10), and disposed coaxially with the rotor hub (10);
a torus (51, 60, 65) disposed between the rotor hub (10) and the output hub (70) and configured to transmit a rotational force of the rotor hub (10) to the output hub (70);
a lock-up clutch (29, 82, 83) disposed between the rotor hub (10) and the output hub (70) and configured to restrict or allow rotations of the rotor hub (10) and the output hub (70); and
a pendulum assembly (90) connected to the output hub (70),
wherein a center alignment surface (73) is provided on an outer periphery of the output hub (70),
wherein the torus (51, 60, 65) has a first centripetal extension portion (661) centered while facing and adjoining the center alignment surface (73) in a radial direction,
wherein the lock-up clutch (29, 82, 83) has a second centripetal extension portion (832) centered while facing and adjoining the center alignment surface (73) in the radial direction, and
wherein the pendulum assembly (90) has a third centripetal extension portion (953) centered while facing and adjoining the center alignment surface (73) in the radial direction.

2. The hybrid driving module of claim 1, wherein the center alignment surface (73) has a predetermined outer diameter in the axial direction.

3. The hybrid driving module of claim 1, wherein the third centripetal extension portion (953) is disposed between the first centripetal extension portion (661) and the second centripetal extension portion (832) in the axial direction.

4. The hybrid driving module of claim 3, wherein an inclined surface portion (952), which extends rearward radially outward, is connected to a centrifugal side of the third centripetal extension portion (953),
wherein a front cover (20) connected to the rotor hub (10) has a radially enlarged portion (27) having a larger radius than the rotor hub (10), and
wherein the pendulum assembly (90) is disposed between the radially enlarged portion (27) and the torus (51, 60, 65).

5. The hybrid driving module of claim 3, wherein the first centripetal extension portion (661) is disposed rearward of the second centripetal extension portion (832) and the third centripetal extension portion (953) in the axial direction.

6. The hybrid driving module of claim 2, wherein an inner diameter of an inner peripheral surface of the third centripetal extension portion (953) adjoining the center alignment surface (73) corresponds to an inner diameter of an inner peripheral surface of the first centripetal extension portion (661) adjoining the center alignment surface (73) or an inner diameter of an inner peripheral surface of the second centripetal extension portion (832) adjoining the center alignment surface (73).

7. The hybrid driving module of claim 1, wherein an inner diameter of an inner peripheral surface of the first centripetal extension portion (661) adjoining the center alignment surface (73), an inner diameter of an inner peripheral surface of the second centripetal extension portion (832) adjoining the center alignment surface (73), and an inner diameter of an inner peripheral surface of the third centripetal extension portion (953) adjoining the center alignment surface (73) correspond to one another.

8. The hybrid driving module of claim 1, wherein the output hub (70) has a centrifugal extension portion (74) extending in a centrifugal direction from the center alignment surface (73), and
wherein any one selected from the centrifugal extension portion (74), the first centripetal extension portion (661), the second centripetal extension portion (832), and the third centripetal extension portion (953) is restricted while adjoining at least another of the centrifugal extension portion (74), the first centripetal extension portion (661), the second centripetal extension portion (832), and the third centripetal extension portion (953) in the axial direction.

9. The hybrid driving module of claim 8, wherein an outer diameter of the centrifugal extension portion (74) is larger than an inner diameter of the first centripetal extension portion (661), an inner diameter of the second centripetal extension portion (832), and an inner diameter of the third centripetal extension portion (953).

10. The hybrid driving module of claim 9, wherein the centrifugal extension portion (74) has a plurality of first holes (741) disposed to be spaced apart from one another in a circumferential direction,
wherein the first centripetal extension portion (661) has a plurality of second holes (663) disposed to be spaced apart from one another in the circumferential direction,
wherein the second centripetal extension portion (832) has a plurality of third holes (834) disposed to be spaced apart from one another in the circumferential direction,
wherein the third centripetal extension portion (953) has a plurality of fourth holes (954) disposed to be spaced apart from one another in the circumferential direction, and
wherein the first holes (741), the second holes (663), the third holes (834), and the fourth holes (954), which are aligned in the axial direction, are fastened by common fastening members (R).

11. The hybrid driving module of claim 8, wherein the centrifugal extension portion (74) is disposed forward or rearward of the first centripetal extension portion (661), the second centripetal extension portion (832), and the third centripetal extension portion (953).

12. The hybrid driving module of claim 8, wherein the centrifugal extension portion (74), the first centripetal extension portion (661), the second centripetal extension portion (832), and the third centripetal extension portion (953) are fastened by a plurality of common fastening members (R) disposed to be spaced apart from one another in a circumferential direction, such that a center of the output hub (70) and centers of the torus (51, 60, 65), the lock-up clutch (29, 82, 83), and the pendulum assembly (90) are aligned.

13. The hybrid driving module of claim 12, wherein an outer diameter of the centrifugal extension portion (74) is larger than an inner diameter of the first centripetal extension portion (661), an inner diameter of the second centripetal extension portion (832), and an inner diameter of the third centripetal extension portion (953).

14. The hybrid driving module of claim 13, wherein the centrifugal extension portion (74) has a plurality of first holes (741) disposed to be spaced apart from one another in a circumferential direction,
wherein the first centripetal extension portion (661) has a plurality of second holes (663) disposed to be spaced apart from one another in the circumferential direction,
wherein the second centripetal extension portion (832) has a plurality of third holes (834) disposed to be spaced apart from one another in the circumferential direction,
wherein the third centripetal extension portion (953) has a plurality of fourth holes (954) disposed to be spaced apart from one another in the circumferential direction, and
wherein the first holes (741), the second holes (663), the third holes (834), and the fourth holes (954), which are aligned in the axial direction, are fastened by the common fastening members (R).

15. The hybrid driving module of claim 14, wherein the common fastening members (R) comprise a first rivet.

## Patentansprüche

1. Hybridantriebsmodul, umfassend:
eine Rotornabe (10);
eine Antriebswelle (44), die mit einem Motor gekoppelt ist, dazu ausgebildet ist, relativ zu der Rotornabe (10) drehbar zu sein, in einer axialen Richtung vor der Rotornabe (10) angeordnet ist und koaxial zu der Rotornabe (10) angeordnet ist;
eine Motorkupplung (30, 47, 48), die zwischen der Antriebswelle (44) und der Rotornabe (10) angeordnet ist und dazu ausgebildet ist, Drehungen der Antriebswelle (44) und der Rotornabe (10) einzuschränken oder zu erlauben;
eine Abtriebsnabe (70), die mit einem Getriebe verbunden ist, dazu ausgebildet ist, relativ zu der Rotornabe (10) drehbar zu sein, hinter der Rotornabe (10) angeordnet ist und koaxial zu der Rotornabe (10) angeordnet ist;
einen Torus (51, 60, 65), der zwischen der Rotornabe (10) und der Abtriebsnabe (70) angeordnet ist und dazu ausgebildet ist, eine Drehkraft der Rotornabe (10) zu der Abtriebsnabe (70) zu übertragen;
eine Überbrückungskupplung (29, 82, 83), die zwischen der Rotornabe (10) und der Abtriebsnabe (70) angeordnet ist und dazu ausgebildet ist, Drehungen der Rotornabe (10) und der Abtriebsnabe (70) einzuschränken oder zu erlauben; und
eine Pendelanordnung (90), die mit der Abtriebsnabe (70) verbunden ist,
wobei eine Zentrierfläche (73) an einem Außenumfang der Abtriebsnabe (70) bereitgestellt ist,
wobei der Torus (51, 60, 65) einen ersten zentripetalen Verlängerungsabschnitt (661) aufweist, der zentriert ist, in einer radialen Richtung der Zentrierfläche (73) zugewandt ist und an diese grenzt,
wobei die Überbrückungskupplung (29, 82, 83) einen zweiten zentripetalen Verlängerungsabschnitt (832) aufweist, der zentriert ist, in der radialen Richtung der Zentrierfläche (73) zugewandt ist und an diese grenzt, und
wobei die Pendelanordnung (90) einen dritten zentripetalen Verlängerungsabschnitt (953) aufweist, der zentriert ist, in der radialen Richtung der Zentrierfläche (73) zugewandt ist und an diese grenzt.

2. Hybridantriebsmodul nach Anspruch 1, wobei die Zentrierfläche (73) in der axialen Richtung einen zuvor festgelegten Außendurchmesser aufweist.

3. Hybridantriebsmodul nach Anspruch 1, wobei der dritte zentripetale Verlängerungsabschnitt (953) in der axialen Richtung zwischen dem ersten zentripetalen Verlängerungsabschnitt (661) und dem zweiten zentripetalen Verlängerungsabschnitt (832) angeordnet ist.

4. Hybridantriebsmodul nach Anspruch 3, wobei ein geneigter Oberflächenabschnitt (952), der sich nach hinten radial auswärts erstreckt, mit einer zentrifugalen Seite des dritten zentripetalen Verlängerungsabschnitts (953) verbunden ist,
wobei eine vordere Abdeckung (20), die mit der Rotornabe (10) verbunden ist, einen radial vergrößerten Abschnitt (27) aufweist, der einen größeren Radius als die Rotornabe (10) aufweist, und
wobei die Pendelanordnung (90) zwischen dem radial vergrößerten Abschnitt (27) und dem Torus (51, 60, 65) angeordnet ist.

5. Hybridantriebsmodul nach Anspruch 3, wobei der erste zentripetale Verlängerungsabschnitt (661) in der axialen Richtung hinter dem zweiten zentripetalen Verlängerungsabschnitt (832) und dem dritten zentripetalen Verlängerungsabschnitt (953) angeordnet ist.

6. Hybridantriebsmodul nach Anspruch 2, wobei ein Innendurchmesser einer Innenumfangsfläche des dritten zentripetalen Verlängerungsabschnitts (953), der an die Zentrierfläche (73) grenzt, einem Innendurchmesser einer Innenumfangsfläche des ersten zentripetalen Verlängerungsabschnitts (661), der an die Zentrierfläche (73) grenzt, oder einem Innendurchmesser einer Innenumfangsfläche des zweiten zentripetalen Verlängerungsabschnitts (832), der an die Zentrierfläche (73) grenzt, entspricht.

7. Hybridantriebsmodul nach Anspruch 1, wobei ein Innendurchmesser einer Innenumfangsfläche des ersten zentripetalen Verlängerungsabschnitts (661), der an die Zentrierfläche (73) grenzt, ein Innendurchmesser einer Innenumfangsfläche des zweiten zentripetalen Verlängerungsabschnitts (832), der an die Zentrierfläche (73) grenzt, und ein Innendurchmesser einer Innenumfangsfläche des dritten zentripetalen Verlängerungsabschnitts (953), der an die Zentrierfläche (73) grenzt, einander entsprechen.

8. Hybridantriebsmodul nach Anspruch 1, wobei die Abtriebsnabe (70) einen zentrifugalen Verlängerungsabschnitt (74) aufweist, der sich in einer zentrifugalen Richtung von der Zentrierfläche (73) erstreckt, und
wobei einer, der ausgewählt ist aus dem zentrifugalen Verlängerungsabschnitt (74), dem ersten zentripetalen Verlängerungsabschnitt (661), dem zweiten zentripetalen Verlängerungsabschnitt (832) und dem dritten zentripetalen Verlängerungsabschnitt (953), eingeschränkt ist, während er in der axialen Richtung an mindestens einen anderen von dem zentrifugalen Verlängerungsabschnitt (74), dem ersten zentripetalen Verlängerungsabschnitt (661), dem zweiten zentripetalen Verlängerungsabschnitt (832) und dem dritten zentripetalen Verlängerungsabschnitt (953) grenzt.

9. Hybridantriebsmodul nach Anspruch 8, wobei ein Außendurchmesser des zentrifugalen Verlängerungsabschnitts (74) größer ist als ein Innendurchmesser des ersten zentripetalen Verlängerungsabschnitts (661), ein Innendurchmesser des zweiten zentripetalen Verlängerungsabschnitts (832) und ein Innendurchmesser des dritten zentripetalen Verlängerungsabschnitts (953).

10. Hybridantriebsmodul nach Anspruch 9, wobei der zentrifugale Verlängerungsabschnitt (74) mehrere erste Löcher (741) aufweist, die in einer Umfangsrichtung voneinander beabstandet angeordnet sind,
wobei der erste zentripetale Verlängerungsabschnitt (661) mehrere zweite Löcher (663) aufweist, die in der Umfangsrichtung voneinander beabstandet angeordnet sind,
wobei der zweite zentripetale Verlängerungsabschnitt (832) mehrere dritte Löcher (834) aufweist, die in der Umfangsrichtung voneinander beabstandet angeordnet sind,
wobei der dritte zentripetale Verlängerungsabschnitt (953) mehrere vierte Löcher (954) aufweist, die in der Umfangsrichtung voneinander beabstandet angeordnet sind, und
wobei die ersten Löcher (741), die zweiten Löcher (663), die dritten Löcher (834) und die vierten Löcher (954), die in der axialen Richtung aufeinander ausgerichtet sind, durch gemeinsame Befestigungselemente (R) befestigt sind.

11. Hybridantriebsmodul nach Anspruch 8, wobei der zentrifugale Verlängerungsabschnitt (74) vor oder hinter dem ersten zentripetalen Verlängerungsabschnitt (661), dem zweiten zentripetalen Verlängerungsabschnitt (832) und dem dritten zentripetalen Verlängerungsabschnitt (953) angeordnet ist.

12. Hybridantriebsmodul nach Anspruch 8, wobei der zentrifugale Verlängerungsabschnitt (74), der erste zentripetale Verlängerungsabschnitt (661), der zweite zentripetale Verlängerungsabschnitt (832) und der dritte zentripetale Verlängerungsabschnitt (953) durch mehrere gemeinsame Befestigungselemente (R) befestigt sind, die in einer Umfangsrichtung voneinander beabstandet angeordnet sind, dergestalt, dass eine Mitte der Abtriebsnabe (70) und Mitten des Torus (51, 60, 65), der Überbrückungskupplung (29, 82, 83) und der Pendelanordnung (90) aufeinander ausgerichtet sind.

13. Hybridantriebsmodul nach Anspruch 12, wobei ein Außendurchmesser des zentrifugalen Verlängerungsabschnitts (74) größer ist als ein Innendurchmesser des ersten zentripetalen Verlängerungsabschnitts (661), ein Innendurchmesser des zweiten zentripetalen Verlängerungsabschnitts (832) und ein Innendurchmesser des dritten zentripetalen Verlängerungsabschnitts (953).

14. Hybridantriebsmodul nach Anspruch 13, wobei der zentrifugale Verlängerungsabschnitt (74) mehrere erste Löcher (741) aufweist, die in einer Umfangsrichtung voneinander beabstandet angeordnet sind,
wobei der erste zentripetale Verlängerungsabschnitt (661) mehrere zweite Löcher (663) aufweist, die in der Umfangsrichtung voneinander beabstandet angeordnet sind,
wobei der zweite zentripetale Verlängerungsabschnitt (832) mehrere dritte Löcher (834) aufweist, die in der Umfangsrichtung voneinander beabstandet angeordnet sind,
wobei der dritte zentripetale Verlängerungsabschnitt (953) mehrere vierte Löcher (954) aufweist, die in der Umfangsrichtung voneinander beabstandet angeordnet sind, und
wobei die ersten Löcher (741), die zweiten Löcher (663), die dritten Löcher (834) und die vierten Löcher (954), die in der axialen Richtung aufeinander ausgerichtet sind, durch die gemeinsamen Befestigungselemente (R) befestigt sind.

15. Hybridantriebsmodul nach Anspruch 14, wobei die gemeinsamen Befestigungselemente (R) einen ersten Niet umfassen.

## Revendications

1. Module d'entraînement hybride comprenant :
un moyeu de rotor (10) ;
un arbre d'entraînement (44) accouplé à un moteur, conçu pour pouvoir tourner par rapport au moyeu de rotor (10), disposé en avant du moyeu de rotor (10) dans une direction axiale, et disposé coaxialement au moyeu de rotor (10) ;
un embrayage de moteur (30, 47, 48) disposé entre l'arbre d'entraînement (44) et le moyeu de rotor (10) et conçu pour limiter ou permettre la rotation de l'arbre d'entraînement (44) et du moyeu de rotor (10) ;
un moyeu de sortie (70) relié à une transmission, conçu pour pouvoir tourner par rapport au moyeu de rotor (10), disposé en arrière du moyeu de rotor (10) et disposé coaxialement au moyeu de rotor ;
un tore (51, 60, 65) disposé entre le moyeu de rotor (10) et le moyeu de sortie (70) et conçu pour transmettre une force de rotation du moyeu de rotor (10) au moyeu de sortie (70) ;
un embrayage de verrouillage (29, 82, 83) disposé entre le moyeu de rotor (10) et le moyeu de sortie (70) et conçu pour limiter ou permettre des rotations du moyeu de rotor (10) et du moyeu de sortie (70) ; et
un ensemble pendulaire (90) relié au moyeu de sortie (70),
dans lequel une surface d'alignement centrale (73) est prévue sur une périphérie extérieure du moyeu de sortie (70),
dans lequel le tore (51, 60, 65) comporte une première partie d'extension centripète (661) centrée, tournée vers la surface d'alignement centrale (73) et adjacente à celle-ci dans une direction radiale,
dans lequel l'embrayage de verrouillage (29, 82, 83) comporte une deuxième partie d'extension centripète (832) centrée, tournée vers la surface d'alignement centrale (73) et adjacente à celle-ci dans la direction radiale, et
dans lequel l'ensemble pendulaire (90) comporte une troisième partie d'extension centripète (953) centrée, tournée vers la surface d'alignement centrale (73) et adjacente à celle-ci dans la direction radiale.

2. Module d'entraînement hybride selon la revendication 1, dans lequel la surface d'alignement centrale (73) présente un diamètre extérieur prédéterminé dans la direction axiale.

3. Module d'entraînement hybride selon la revendication 1, dans lequel la troisième partie d'extension centripète (953) est disposée entre la première partie d'extension centripète (661) et la deuxième partie d'extension centripète (832) dans la direction axiale.

4. Module d'entraînement hybride selon la revendication 3, dans lequel une partie de surface inclinée (952), qui s'étend vers l'arrière radialement vers l'extérieur, est reliée à un côté centrifuge de la troisième partie d'extension centripète (953),
dans lequel un couvercle avant (20) relié au moyeu de rotor (10) comporte une partie élargie radialement (27) présentant un rayon supérieur à celui du moyeu de rotor (10), et
dans lequel l'ensemble pendulaire (90) est disposé entre la partie élargie radialement (27) et le tore (51, 60, 65).

5. Module d'entraînement hybride selon la revendication 3, dans lequel la première partie d'extension centripète (661) est disposée en arrière de la deuxième partie d'extension centripète (832) et de la troisième partie d'extension centripète (953) dans la direction axiale.

6. Module d'entraînement hybride selon la revendication 2, dans lequel un diamètre intérieur d'une surface périphérique intérieure de la troisième partie d'extension centripète (953) adjacente à la surface d'alignement centrale (73) correspond à un diamètre intérieur d'une surface périphérique intérieure de la première partie d'extension centripète (661) adjacente à la surface d'alignement centrale (73) ou à un diamètre intérieur d'une surface périphérique intérieure de la deuxième partie d'extension centripète (832) adjacente à la surface d'alignement centrale (73).

7. Module d'entraînement hybride selon la revendication 1, dans lequel un diamètre intérieur d'une surface périphérique intérieure de la première partie d'extension centripète (661) adjacente à la surface d'alignement centrale (73), un diamètre intérieur d'une surface périphérique intérieure de la deuxième partie d'extension centripète (832) adjacente à la surface d'alignement centrale (73), et un diamètre intérieur d'une surface périphérique intérieure de la troisième partie d'extension centripète (953) adjacente à la surface d'alignement centrale (73) correspondent les uns aux autres.

8. Module d'entraînement hybride selon la revendication 1, dans lequel le moyeu de sortie (70) comporte une partie d'extension centrifuge (74) s'étendant dans une direction centrifuge à partir de la surface d'alignement centrale (73), et
dans lequel une quelconque sélectionnée parmi la partie d'extension centrifuge (74), la première partie d'extension centripète (661), la deuxième partie d'extension centripète (832), et la troisième partie d'extension centripète (953) est restreinte tout en étant contiguë à au moins une autre parmi la partie d'extension centrifuge (74), la première partie d'extension centripète (661), la deuxième partie d'extension centripète (832), et la troisième partie d'extension centripète (953) dans la direction axiale.

9. Module d'entraînement hybride selon la revendication 8, dans lequel un diamètre extérieur de la partie d'extension centrifuge (74) est supérieur à un diamètre intérieur de la première partie d'extension centripète (661), à un diamètre intérieur de la deuxième partie d'extension centripète (832), et à un diamètre intérieur de la troisième partie d'extension centripète (953).

10. Module d'entraînement hybride selon la revendication 9, dans lequel la partie d'extension centrifuge (74) comporte une pluralité de premiers trous (741) disposés de manière à être espacés les uns des autres dans une direction circonférentielle,
dans lequel la première partie d'extension centripète (661) comporte une pluralité de deuxièmes trous (663) disposés de manière à être espacés les uns des autres dans la direction circonférentielle,
dans lequel la deuxième partie d'extension centripète (832) comporte une pluralité de troisièmes trous (834) disposés de manière à être espacés les uns des autres dans la direction circonférentielle,
dans lequel la troisième partie d'extension centripète (953) comporte une pluralité de quatrièmes trous (954) disposés de manière à être espacés les uns des autres dans la direction circonférentielle, et
dans lequel les premiers trous (741), les deuxièmes trous (663), les troisièmes trous (834), et les quatrièmes trous (954), qui sont alignés dans la direction axiale, sont fixés par des éléments de fixation communs (R).

11. Module d'entraînement hybride selon la revendication 8, dans lequel la partie d'extension centrifuge (74) est disposée en avant ou en arrière de la première partie d'extension centripète (661), de la deuxième partie d'extension centripète (832), et de la troisième partie d'extension centripète (953).

12. Module d'entraînement hybride selon la revendication 8, dans lequel la partie d'extension centrifuge (74), la première partie d'extension centripète (661), la deuxième partie d'extension centripète (832), et la troisième partie d'extension centripète (953) sont fixées par une pluralité d'éléments de fixation communs (R) disposés de manière à être espacés les uns des autres dans une direction circonférentielle, de manière qu'un centre du moyeu de sortie (70) et des centres du tore (51, 60, 65), de l'embrayage de verrouillage (29, 82, 83), et de l'ensemble pendulaire (90) soient alignés.

13. Module d'entraînement hybride selon la revendication 12, dans lequel un diamètre extérieur de la partie d'extension centrifuge (74) est supérieur à un diamètre intérieur de la première partie d'extension centripète (661), à un diamètre intérieur de la deuxième partie d'extension centripète (832), et à un diamètre intérieur de la troisième partie d'extension centripète (953).

14. Module d'entraînement hybride selon la revendication 13, dans lequel la partie d'extension centrifuge (74) comporte une pluralité de premiers trous (741) disposés de manière à être espacés les uns des autres dans une direction circonférentielle,
dans lequel la première partie d'extension centripète (661) comporte une pluralité de deuxièmes trous (663) disposés de manière à être espacés les uns des autres dans la direction circonférentielle,
dans lequel la deuxième partie d'extension centripète (832) comporte une pluralité de troisièmes trous (834) disposés de manière à être espacés les uns des autres dans la direction circonférentielle,
dans lequel la troisième partie d'extension centripète (953) comporte une pluralité de quatrièmes trous (954) disposés de manière à être espacés les uns des autres dans la direction circonférentielle, et
dans lequel les premiers trous (741), les deuxièmes trous (663), les troisièmes trous (834), et les quatrièmes trous (954), qui sont alignés dans la direction axiale, sont fixés par les éléments de fixation communs (R).

15. Module d'entraînement hybride selon la revendication 14, dans lequel les éléments de fixation communs (R) comprennent un premier rivet.
